# EUROPEAN PATENT SPECIFICATION

(11) **EP 1 995 927 B1**
(45) Date of publication and mention of the grant of the patent: **21.10.2015**
(21) Application number: 07290666.2
(22) Date of filing: 24.05.2007
(51) Int. Cl.: H04L 29/06, G06F 21/40, G06F 21/42

(54) **Method, forwarding device and modules for authentication of a user at a business application over the internet**
Verfahren, Beförderungsvorrichtung und Module zur Authentifizierung eines Benutzers einer Geschäftsanwendung im Internet
Procédé, dispositif de transfert et modules pour l'authentification d'un utilisateur dans une application commerciale sur Internet

(43) Date of publication of application: 26.11.2008
(73) Proprietor: ALCATEL LUCENT, 92100 Boulogne-Billancourt (FR)
(72) Inventor: Papillon, Serge, 75014 Paris (FR); Ansiaux, Arnaud, 91620 Nozay (FR)
(74) Representative: Wetzel, Emmanuelle

(56) References cited:
- EP-A- 1 288 765
- FR-A- 2 794 594
- FR-A- 2 830 100

## Description

The invention relates to a method, a forwarding device and a forwarding module for authentication of a user at a business application over the Internet.

Business applications reachable over the Internet, for example a bank application or a Internet retailer, requires the authentication of a user. It is common to use a login name and a password to authenticate at a business application. In this scenario, the factor for authentication is somewhat that the uses knows, such as his password, personal identification number or the like.

It becomes more and more common to use something that the user has, such as a mobile phone, as a second authentication factor.

After authentication by login and password as a first factor the user and the business application communicate via something that the user has, namely his mobile phone or cell phone. To this end, the business application sends a token to the user using the mobile phone number of the user. Then, the user enters the token into a WEB interface for authentication reasons.

This method has however some drawbacks:

It is necessary that the user divulges his cellular phone number to the business application, e.g. to the bank. This is bad for privacy, because the bank or other business application may resell or retail the mobile phone number to third parties.

There is a risk that the mobile phone number is changed by fraud. It is for example possible to change a phone number online. A person could change the mobile phone number online before the critical transaction with the business application and eventually change back the mobile phone number after its fraudulent use.

It is possible that a mobile phone gets stolen. If in this scenario the bank sends the token to the mobile phone. The thief may use the stolen mobile phone for authentication at the business application.

If a bank uses a former mobile phone number of the user who has in the meantime changed his mobile phone number the token is sent to the former mobile phone number and consequently to a wrong destination.

The communication path between the business application and the user terminal may be too slow. Then, the token may reach the terminal of the user only after the end of its validity time.

Lastly, the authentication using a mobile phone number improves the security for the business application, e.g. for the bank. However the user's security is not improved. The user may for example use a pished or forged WEB site. Then, the user provides his mobile phone number to the pished or forged WEB site that gets by this way the telephone number of the user. Then the mobile phone number may be used for fraudulent transactions. The sender of the token, i.e. the business application or the fraudulent application, is not authenticated by the user.

A method according to the preamble of claim 1 is disclosed in FR 2 830 100 A1. Accordingly, an interaction between a creditor and a debitor is managed using in total four terminals. The creditor has two terminals and the debitor has two terminals. A telecommunication network and a third party co-operate. The telecommunication network converts a reference number into an address of a terminal of the creditor for forwarding a confirmation code.

FR 2 794 594 A1 discloses an authentication system for bank transactions with two links as a loop for verification of confidential information. Two different terminals of a user are linked to two different communications network.

EP 1 288 765 A1 concerns a universal authentication mechanism for authenticating a user to a service provider. An authentication server searches for an address of an authentication device of a user. If more than one address of the user is found, the authentication server can use additional information to select an actual address of the authentication device, for example preference settings of the user indicating addresses for business and private use during certain day times or for specific services.

It is therefore an object of the invention to provide an comfortable, secure authentication.

This object is attained by a method according to the teaching of claim 1 and by a forwarding device and a forwarding module according to the teachings of further independent claims.

The idea underlining the invention is to give the responsibility for the second factor, the user terminal or the user address, to the entity managing the mobile phone number of the user: the telecom operator. The invention may be used in connection with any business to business service (B2B), for example banks, Internet retailers or any other business application that needs a strong authentication and wants to have a authentication with a something-you-have-factor, for example the user's mobile phone number or the like. The business application does not send the token immediately to the user rather than to the telecom operator for forwarding to the end user's terminal. Therefore, the business application, for example the bank, does not need to know the mobile phone number of the user. Instead, the responsibility is at the telecom operator's side who has the responsibility for the validity of the user's communication address.

The implementation of the invention may comprise hardware and/or software.

The business application may be for example provided by a business application module that is carried out by a business to business server, e.g. of a bank, an Internet retailer or the like. At the telecom network's side also a software module or a group of software modules can carry out the method according to the invention. The respective forwarding module(s) of the telecom network contain(s) program code that is executed by a processor of e.g. a server or a server arrangement of the telecommunications network. The telecommunications network may for example contain a business to business server co-operating with the bank's business to business server wherein the business to business server of the telecommunications network carries out the program code of the inventive forwarding module.

According to the invention, the user does not need to give his communication address, in particular his telephone number, to a third party. It is sufficient that the operator of the telecommunications network knows the communication address. This is by the way the core business of the operator. It is for the business application only necessary to know which telecommunication operator provides telecommunication services for the user.

It may be possible that the user owns more than one terminals related to the communication address or a several communication addresses operated by the telecommunications network. It is then preferred, if the forwarding device or another identifying device of the telecommunications network determines a group of terminals which are currently connected to the telecommunications network.

The forwarding device or an another identifying device identify the user terminal out of the group of terminals and/or out of a group of communication addresses. Identification criteria or electing criteria are
- the transfer rate of the connection between the telecommunications network and the respective terminal,
- the security of the connection to the respective user terminal,
- technical capabilities of the user terminal, for example a quality of a display, the ability to perform security functions, or the like.

The Identification criteria or electing criteria may inter alia also comprise a user profile, in which preferences of the user are stored.

The security in connection with the communication address is high. The operator of the telecommunications network takes care for the security.

In the event that the user's terminal gets stolen the operator of the telecommunications network is usually the first party to get information thereof. Then, the operator can stop any request from a business application to send a token to that terminal.

The communication of the token from the business application to the terminal is optimised. The operator can influence the transmission of a message containing the token to the user terminal, for example by adjusting the priority of the message, by selecting a certain quality of service (QoS) and the like. Therefore, the token will arrive at the user terminal faster and/or in a better quality.

Moreover, the communication between the business application and the forwarding device or forwarding arrangement of the telecommunications network is improved. Between both parties there may be a strong mutual authentication. Therefore, the user may be sure that the operator of the telecommunications network has authenticated the business application using the business to business service. Therefore, the user can be more confident that he is using a genuine WEB site of a business application.

The communications network comprises or is preferably a mobile or cellular network. The communication terminal of the user is preferably a mobile terminal, for example a cell phone, a wireless PDA, a pager or the like. However, it is also possible to apply the invention to a fixed network, for example a classical ISDN telephone network. Moreover, the user terminal may for example be also a Internet protocol television set (IP TV).

The forwarding device of forwarding module may be implemented in a legacy network or as an embedded system in a service enabling platform or the like. Also the implementation in a IMS architecture is possible (IMS = IP Multimedia Subsystem).

The token may have a predetermined validity time. The token may be entered from the user into a WEB interface of the business application. It may be a task of the telecommunications network, in particular the forwarding device or module, to convert the token prior forwarding to said user terminal into other formats, for example into speech or into a visual object.

The invention is preferred in connection with financial applications, in particular with bank applications or retail applications.

Preferably the method is part of a multi-factor authentication, for example a Two-factor authentication or a Three-factor authentication wherein the communication address or the user terminal to which the token is sent represents a factor being the something that the user has. Other factors may be for example something that the user knows (password, personal identification number/PIN or the like) or something that the user is, in particular a biometric of the user, for example a fingerprint or the like.

The communication address of the communication terminal is an address with which user's terminal(s) is or are addressed within the telecommunications network. It may be well understood that the communication address may comprise a phone number or other series of digits, but also a compact string of characters used to identify or name a resource like URIs (Uniform Resource Identifier). A Uniform Resource Identifier may comprise digits (a tel-uri, like tel:+1-123-456-789) or alphanumeric identifiers. e.g. a sip-uri (SIP = Session Initiation Protocol), like sip:paul.guest@test.com).

The communication address may for example comprise one or more of the following identifiers:
- International Mobile Subscriber Identity (IMSI)
- Temporary Mobile Subscriber Identity (TMSI)
- International Mobile Equipment Identity (IMEI)
- Subscriber ISDN Number (SISDN) or a Mobile Subscriber ISDN Number (MSISDN)
- IP Multimedia Private Identity (IMPI)
- IP Multimedia Public Identity (IMPU)

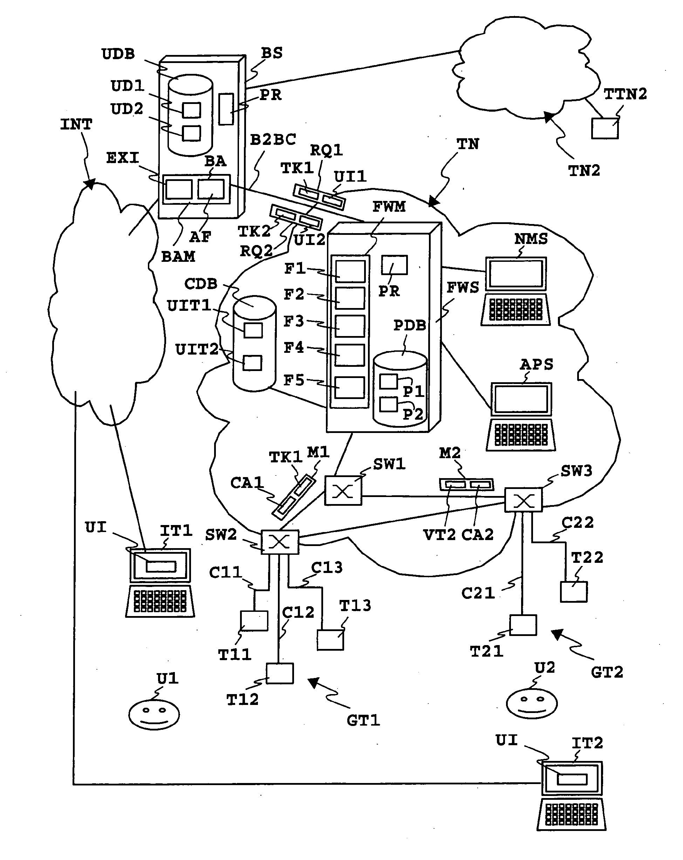

The invention will become more apparent by reference to the following description of embodiments taken in conjunction with the accompanying sole figure.

A user U1 and a user U2 may use a telecommunications network TN for example a cellular network, with their terminals T11, T12, T13 or T21 and T22.

The users U1 or U2 may use a business application BA by means of Internet terminals IT1, IT2 via the Internet INT. The business application BA is for example a bank application, a retail service or the like. Therefore, it is necessary that the users U1 or U2 authenticate themselves at the business application BA.

A business server BS provides the business application BA. A processor PR executes program code of business application module BAM. The business application module BAM has an external WEB interface function EXI that generates for example a user interface UI using a browser like for example Internet Explorer or Mozilla Firefox run by the Internet Terminals IT1 or IT2. The Internet Terminals INT1, INT2, may be for example personal computers, mobile phones, PDAs (Personal Digital Assistance) or the like.

The user U1 or U2 request a service from the business application BA, for example a financial transaction or a purchase service. At a predetermined threshold the users U1 or U2 need to enter a first authentication factor for example a password, a personal identification number or the like.

The business application BA performs in co-operation with the telecommunications network TN a 2-factor authentication method in accordance with the invention which gives a higher degree of security:

If e.g. the user U1 has input his login data, e.g. name and password, into user interface UI the WEB interface function EXI forwards this login data to a authentication function AF of the business application module BAM. Using the login data of the user U1 the authentication function AF determines within a user database UDB, user data UD1 of the user U1. The user database UDB may be a part of the business application module BAM or an external application. The user database may be run by the business server BS or an external server (not shown) .

User data UD1 contain a user identifier UI1 for example the name of the user U1 and the information that the user U1 wants to be connected via a terminal that is connected to the telecommunications network TN rather than via a terminal operated by a telecommunications network TN2, e.g. a terminal TTN2.

However, neither the business application BA nor the user database UDB contain a communication address of one of the terminals T11, T12 or T13 of user U1. Therefore, the business application BA cannot send a token TK1 directly to one of the terminals T11, T12 or T13. According to the invention, the business application BA uses the services of the telecommunications network TN to this end. The token TK1 may be for example a text token, an audio token, a video token etc.

The business application module BAM establishes a business to business connection to a forwarding server FWS of the telecommunications network TN. The forwarding server FWS represents a forwarding device. Instead of one forwarding server FWS it may be possible to provide a group of servers that perform the following functions:

After mutual authentication during the establishment of the connection B2BC the business application BA sends a request message RQ1 to the forwarding server FWS. The request message RQ1 contains the user identifier UI1 identifying the user U1, for example the name of the user U1 or identification data of the user U1 input at the user interface UI.

The mutual authentication between the servers BS and FWS is preferably performed by using certificates or other security features. The mutual authentication avoids fraudulent attacks to the business to business communication between the servers BS and FWS.

A receiving function F1 of a forwarding module FWM of the forwarding server FWS receives the message RQ1. The receiving function F1 is for example responsible for a mutual authentication of the business application BA at the forwarding server FWS. The forwarding module FWM comprises program code executable by a processor PR of the forwarding server FWS.

The receiving function F1 converts the user identifier UI1 of user U1 into a user identifier UIT1 of the telecommunications network TN. To this end, the receiving function F1 addresses for example a conversion database CDB that provides the user identifier UIT1 internally used within the telecommunications network TN. The conversion database CDB may be a part of forwarding server FWS or a separate device.

A connected devices list function F2 determines which of the terminals T11, T12 or T13 is actually connected to the telecommunications network TN. The devices T11, T12 and T13 are for example mobile phones, personal digital assistance, computers, affixed telephones or the like. It may be for example the case that the terminals T11 and T13 are actually not connected to the telecommunications network TN whereas the terminal T11, a mobile phone, is actually logged in the telecommunications network TN. In the present case, all terminals T11, T12 and T13 are presently connected with the telecommunications network TN. The terminals T11, T12 and T13 are connected via connections C11, C12 and C13 with a communication node SW2 of the telecommunications network TN. The connections C11, C12, C13 may be wire connections or wireless connections.

The communication node SW2, e.g. an access node, is interconnected with other telecommunication nodes SW1 and SW3, for example switching centres, of the telecommunications network TN.

In any case, each of the terminals T11, T12 and T13 are related at to least one communication address CA1 of the user U1, for example a mobile phone number, a IP multimedia public identity (IMPU) or the like.

A device selection function F3 selects one of the terminals T11, T12 and T13 being a part of a group of terminals GT1 of the user U1 connected to the telecommunications network TN. The function F3 selects the terminal T11, T12 or T13 in accordance to a decision algorithm that takes into account one or more of the criteria described below:

The function F3 selects for example that one of the connections C11, C12 or C13 for forwarding the token TK1 to the user U1 which provides the highest transmission rate. In order to forward the token TK1 during its period of validity.

It is also possible that the function F3 selects that connection C11, C12 or C13 which provides the best quality of service and/or the highest security. For example the security of a wire connection could be better than the security of a wireless connection.

It is also possible that the technical abilities of one of the terminals T11, T12 or T13 is an urgent criterion, e.g. the ability to encrypt or decrypt data communicated via one of the connections C11, C12 or C13. It may be the case that the function F3 selects a connection C11, C12 or C13 that is slower but more secure than the other.

It is also possible for the function F3 to transform the token TK1 into a format that is transmissible and receivable by the respective terminal T11, T12 or T13. The function F3 could for example transform a text token TK1 into an audio or video format.

The functions F2 and F3 are determination functions or determination means to determine the communication address CA1 of the respective terminal T11, T12 or T13 by means of the user identifier UI, e.g. using a user profile database PDB in which user profiles P1 and P2 of the users U1 and U2 as well as profiles of other not shown users are stored. It is however also possible that the forwarding module addresses other entities of the telecommunications network to identify the communication address CA1, to identify the terminals T11, T12 and T13 that are connected to the telecommunications network TN or the like. To this end, the forwarding module FWM may address for example a network management system NMS or application servers APS of the telecommunications network TN.

The token transmission function F4 that represents a forwarding means or forwarding function sends the token TK1 within a message M1 by means of the communication address CA1 to the terminal T11. The terminal T11 outputs the token TK1 for example as visual data (text, graphics or the like) and/or audio data. The user U11 may then input the token TK1 into the user interface UI of the business application module BAM. Then, the authentication process is completed.

An internal communication interface function F5 of the forwarding module FWM is in charge of realising the interface and the mediation between all the existing services in the telecommunications network. The software design of the forwarding module FWM follows preferably an open architecture. Therefore, the forwarding module is upgradeable and can be rapidly enhanced with new functions. It is for example possible that the function F5 links the forwarding module FWM with legacy networks, with an IMS architecture or the like.

Upon service request of the user U2 at the business application BA the authentication function AF sends a request message RQ2 with a token TK2 and a user identifier UI2 to the forwarding server FWS. The authentication function AF determines the user identifier UI2 for example by means of user data UD2 stored within the database UDB.

The forwarding module FWM determines based on user identifier UI2 by means of the conversion database CDB a user identifier UIT2 used within the telecommunications network TN for user U2. Then, the forwarding module FWM determines by means of a user profile P2 that the user U2 prefers to receive tokens at his terminal T21. Therefore, the forwarding module FWM sends the token TK2 within a message M2 to the terminal T21 that is connected via a connection T21 with the communication node SW3. The terminal T2 is connected via connection C22 with the communication node SW3. As the terminal T21 has no possibility to output visual data, for example text messages, the forwarding module FWM converts the token TK1 into a voice token VT2.

If however the function F2 determines that the terminal T21 is not connected to the telecommunications network TN and the group of terminals G2 of the user U2 contains only the terminal T22, the forwarding module forwards the token TK2 within a not shown message immediately and unconverted to the terminal T22 which is for example a PDA.

## Claims

1. Method for authentication of a user (U1, U2) at a business application (BA) over the Internet (INT)
- wherein a token (TK1, TK2) is transmitted from said business application (BA) to a communication terminal of said user (U1, U2), said communication terminal being connected to a telecommunications network (TN),
- wherein said user (U1, U2) sends said token (TK1, TK2) or a token (TK1, TK2) information deduced from said token (TK1, TK2) to said business application (BA) for authentication at said business application (BA),
- wherein said business application (BA) sends said token (TK1, TK2) in connection with a user identifier (UI1, UI2) identifying said user (U1, U2) to a forwarding device (FWS) of said telecommunications network (TN),
- wherein said forwarding device (FWS) determines a communication address (CA1, CA2) of said communication terminal by means of said user identifier (UI1, UI2) and
- wherein said forwarding device (FWS) forwards said token (TK1, TK2) to said communication terminal by means of said communication address (CA1, CA2), **characterised in**
- **that** said forwarding device (FWS) or an identifying device of said telecommunications network (TN) identify said communication terminal out of a plurality of terminals of said user under at least one of the following aspects:
- transfer rate or velocity of transmission of the token (TK1, TK2) to said communication terminal,
- security of a connection to said communication terminal,
- technical capability of said communication terminal.

2. Method in accordance with claim 1, wherein said telecommunications network (TN) is or comprises a mobile network and said communication terminal of said user (U1, U2) is a mobile terminal.

3. Method in accordance with claim 1, wherein said token (TK1, TK2) or said token information deduced from said token (TK1, TK2) is entered into a WEB interface of said business application (BA).

4. Method in accordance with claim 1, wherein said token (TK1, TK2) or said token information deduced from said token (TK1, TK2) have a predetermined validity time.

5. Method in accordance with claim 1, wherein said forwarding device (FWS) converts said token (TK1, TK2) prior forwarding to said user terminal, in particular into speech.

6. Method in accordance with claim 1, wherein said communication address (CA1, CA2) contains a telephone number and/or a alphanumeric identifier, in particular a Uniform Resource Identifier (URI).

7. Method in accordance with claim 1, wherein said business application (BA) is or contains a financial application and/or a bank application.

8. Method in accordance with claim 1, wherein said business application (BA) communicates with said forwarding device (FWS) of said telecommunications network (TN) after a mutual authentication procedure.

9. Method in accordance with claim 1, wherein said business application (BA) and said forwarding device (FWS) co-operate within a business-to-business-environment.

10. Method in accordance with claim 1, wherein said forwarding device (FWS) or said identifying device determine a group of terminals (GT1, GT2) of said user (U1, U2) being connected to said telecommunications network (TN) and being related to said communication address (CA1, CA2).

11. Method in accordance with claim 10, wherein said forwarding device (FWS) or said identifying device identify said user terminal out of said group of terminals (GT1, GT2) of said user (U1, U2).

12. Method in accordance with claim 1, wherein said forwarding device (FWS) or said identifying device identify said user terminal under the aspect of user profile (P1, P2) or user preferences of said user (U1, U2).

13. Method in accordance with claim 1, wherein it is part of a multi-factor authentication, in particular a two-factor authentication, wherein said user terminal or communication address (CA1, CA2) represents a factor being something that said user (U1, U2) has.

14. Method in accordance with claim 1, wherein said multi-factor authentication contains as at least one second factor something that the user (U1, U2) knows, in particular a password and/or a PIN, and/or some biometric of said user (U1, U2).

15. Forwarding device (FWS) of a telecommunications network (TN) for authentication of a user (U1, U2) at a business application (BA) over the Internet (INT), wherein a token (TK1, TK2) is transmitted from said business application (BA) to a communication terminal of said user (U1, U2), said communication terminal being connected to said telecommunications network (TN), and wherein said user (U1, U2) sends said token (TK1, TK2) or a token information deduced from said token (TK1, TK2) to said business application (BA) for authentication at said business application (BA),
- wherein said forwarding device (FWS) comprises a receiving means for receiving said token (TK1, TK2) in connection with a user identifier (UI1, UI2) from said business application (BA), said user (U1, U2) identifier identifying said user (U1, U2),
- wherein said forwarding device (FWS) comprises a determination means for determination of a communication address (CA1, CA2) of said communication terminal by means of said user identifier (UI1, UI2),
- wherein said forwarding device (FWS) comprises a forwarding means for forwarding said token (TK1, TK2) to said communication terminal by means of said communication address (CA1, CA2), and
- **characterised in that** said forwarding device (FWS) comprises device selection means for identifying said communication terminal out of a plurality of terminals of said user
under at least one of the following aspects:
- transfer rate or velocity of transmission of the token (TK1, TK2) to said communication terminal,
- security of a connection to said communication terminal,
- technical capability of said communication terminal.

16. Forwarding module for a forwarding device (FWS) of a telecommunications network (TN) for authentication of a user (U1, U2) at a business application (BA) over the Internet (INT), wherein a token (TK1, TK2) is transmitted from said business application (BA) to a communication terminal of said user (U1, U2), said communication terminal being connected to said telecommunications network (TN), and wherein said user (U1, U2) sends said token (TK1, TK2) or a token information deduced from said token (TK1, TK2) to said business application (BA) for authentication at said business application (BA),
- wherein said forwarding module (FWM) comprises a receiving function (F1) for receiving said token (TK1, TK2) in connection with a user identifier (UI1, UI2) from said business application (BA), said user identifier (UI1, UI2) identifying said user (U1, U2),
- wherein said forwarding module (FWM) comprises a determination function for determination of a communication address (CA1, CA2) of said communication terminal by means of said user identifier (UI1, UI2),
- wherein said forwarding module (FWM) comprises a forwarding function for forwarding said token (TK1, TK2) to said communication terminal by means of said communication address (CA1, CA2), and
- wherein said forwarding module (FWM) comprises a device selection function (F3) for identifying said communication terminal out of a plurality of terminals of said user under at least one of the following aspects:
- transfer rate or velocity of transmission of the token (TK1, TK2) to said communication terminal,
- security of a connection to said communication terminal,
- technical capability of said communication terminal, and
- wherein said forwarding module (FWM) comprises program code being executable by a processor (PR) of said forwarding device (FWS) and being adapted to perform said receiving function (F1), said determination function, said forwarding function and device selection function (F3).

## Patentansprüche

1. Verfahren für die Authentifizierung eines Benutzers (U1, U2) in einer Geschäftsanwendung (BA) im Internet (INT)
- wobei ein Token (TK1, TK2) von besagter Geschäftsanwendung (BA) an ein Kommunikationsendgerät besagten Benutzers (U1, U2) übermittelt wird, wobei besagtes Kommunikationsendgerät mit einem Telekommunikationsnetzwerk (TN) verbunden ist,
- wobei besagter Benutzer (U 1, U2) besagtes Token (TK1, TK2) oder eine aus besagtem Token (TK1, TK2) abgeleitete Token-Information zur Authentifizierung in besagter Geschäftsanwendung (BA) an besagte Geschäftsanwendung (BA) sendet,
- wobei besagte Geschäftsanwendung (BA) besagtes Token (TK1, TK2) in Verbindung mit einer besagten Benutzer (U1, U2) identifizierenden Benutzerkennung (UI1, UI2) an eine Weiterleitungsvorrichtung (FWS) besagten Telekommunikationsnetzwerks (TN) sendet,
- wobei besagte Weiterleitungsvorrichtung (FWS) mittels besagter Benutzerkennung (UI21, UI2) eine Kommunikationsadresse (CA1, CA2) besagten Kommunikationsendgeräts bestimmt und
- wobei besagte Weiterleitungsvorrichtung (FWS) besagtes Token (TK1, TK2) mittels besagter Kommunikationsadresse (CA1, CA2) an besagtes Kommunikationsendgerät weiterleitet, **dadurch gekennzeichnet, dass**
- besagte Weiterleitungsvorrichtung (FWS) oder eine Identifizierungsvorrichtung besagten Telekommunikationsnetzwerks (TN) besagtes Kommunikationsendgerät unter einer Vielzahl von Endgeräten besagten Benutzers anhand von mindestens einem der folgenden Aspekte identifiziert:
- Transferrate oder Übertragungsgeschwindigkeit des Tokens (TK1, TK2) an besagtes Kommunikationsendgerät,
- Sicherheit einer Verbindung zu besagtem Kommunikationsendgerät,
- technische Leistungsfähigkeit besagten Kommunikationsendgeräts.

2. Verfahren nach Anspruch 1, wobei besagtes Telekommunikationsnetzwerk (TN) ein Mobilnetz ist oder ein solches umfasst und besagtes Kommunikationsendgerät besagten Benutzers (U1, U2) ein Mobilendgerät ist.

3. Verfahren nach Anspruch 1, wobei besagtes Token (TK1, TK2) oder besagte, aus besagtem Token (TK1, TK2) abgeleitete Token-Information in eine WEB-Schnittstelle besagter Geschäftsanwendung (BA) eingegeben wird.

4. Verfahren nach Anspruch 1, wobei besagtes Token (TK1, TK2) oder besagte, aus besagtem Token (TK1, TK2) abgeleitete Token-Information eine voreingestellte Gültigkeitsdauer haben.

5. Verfahren nach Anspruch 1, wobei besagte Weiterleitungsvorrichtung (FWS) besagtes Token (TK1, TK2) vor der Weiterleitung an besagtes Benutzerendgerät umwandelt, und zwar konkret in Sprache.

6. Verfahren nach Anspruch 1, wobei besagte Kommunikationsadresse (CA1, CA2) eine Telefonnummer und/oder eine alphamerische Kennung enthält, konkret eine einheitliche Ressourcenkennung (URI).

7. Verfahren nach Anspruch 1, wobei besagte Geschäftsanwendung (BA) eine Finanz- und/oder Bankanwendung ist oder eine solche enthält.

8. Verfahren nach Anspruch 1, wobei besagte Geschäftsanwendung (BA) mit besagter Weiterleitungsvorrichtung (FWS) besagten Telekommunikationsnetzwerks (TN) nach einem wechselseitigen Authentifizierungsprozess kommuniziert.

9. Verfahren nach Anspruch 1, wobei besagte Geschäftsanwendung (BA) und besagte Weiterleitungsvorrichtung (FWS) innerhalb einer Business-to-Business-Umgebung kooperieren.

10. Verfahren nach Anspruch 1, wobei besagte Weiterleitungsvorrichtung (FWS) oder besagte Identifizierungsvorrichtung eine Gruppe von mit besagtem Telekommunikationsnetzwerk (TN) verbundenen und besagter Kommunikationsadresse (CA1, CA2) zugeordneten Endgeräten (GT1, GT2) besagten Benutzers (U 1, U2) bestimmt.

11. Verfahren nach Anspruch 1, wobei besagte Weiterleitungsvorrichtung (FWS) oder besagte Identifizierungsvorrichtung besagtes Benutzerendgerät aus besagter Gruppe von Endgeräten (GT1, GT2) besagten Benutzers (U1, U2) identifizieren.

12. Verfahren nach Anspruch 1, wobei besagte Weiterleitungsvorrichtung (FWS) oder besagte Identifizierungsvorrichtung besagtes Benutzerendgerät unter dem Aspekt des Benutzerprofils (P1, P2) oder der Benutzerpräferenzen besagten Benutzers (U1, U2) identifizieren.

13. Verfahren nach Anspruch 1, wobei das Verfahren Teil einer Multifaktor-Authentifizierung ist, konkret einer Zwei-Faktor-Authentifizierung, wobei besagtes Benutzerendgerät oder besagte Kommunikationsadresse (CA1, CA2) einen Faktor repräsentiert, der für etwas steht, was besagter Benutzer (U1, U2) hat.

14. Verfahren nach Anspruch 1, wobei besagte Multifaktor-Authentifizierung als mindestens einen zweiten Faktor etwas enthält, was der Benutzer (U1, U2) kennt, konkret ein Passwort und/oder einen PIN und/oder eine biometrische Angabe zu besagtem Benutzer (U1, U2).

15. Weiterleitungsvorrichtung (FWS) eines Telekommunikationsnetzwerks (TN) für die Authentifizierung eines Benutzers (U1, U2) einer Geschäftsanwendung (BA) im Internet (INT), wobei ein Token (TK1, TK2) von besagter Geschäftsanwendung (BA) an ein Kommunikationsendgerät besagten Benutzers (U1, U2) übermittelt wird, wobei besagtes Kommunikationsendgerät mit einem Telekommunikationsnetzwerk (TN) verbunden ist, und wobei besagter Benutzer (U 1, U2) besagtes Token (TK1, TK2) oder eine aus besagtem Token (TK1, TK2) abgeleitete Token-Information zur Authentifizierung in besagter Geschäftsanwendung (BA) an besagte Geschäftsanwendung (BA) sendet,
- wobei besagte Weiterleitungsvorrichtung (FWS) Empfangsmittel für den Empfang besagten Tokens (TK1, TK2) in Verbindung mit einer Benutzerkennung (UI1, UI2) von besagter Geschäftsanwendung (BA) umfasst, wobei die Kennung besagten Benutzers (U1, U2) besagten Benutzer (U1, U2) identifiziert,
- wobei besagte Weiterleitungsvorrichtung (FWS) ein Bestimmungsmittel für die Bestimmung einer Kommunikationsadresse (CA1, CA2) besagten Kommunikationsendgeräts mittels besagter Benutzerkennung (UI1, UI2) umfasst,
- wobei besagte Weiterleitungsvorrichtung (FWS) ein Weiterleitungsmittel für die Weiterleitung besagten Tokens (TK1, TK2) an besagtes Kommunikationsendgerät mittels besagter Kommunikationsadresse (CA1, CA2) umfasst und
- **dadurch gekennzeichnet, dass**
besagte Weiterleitungsvorrichtung (FWS) Geräteauswahlmittel für die Identifizierung besagten Kommunikationsendgeräts unter einer Vielzahl von Endgeräten besagten Benutzers anhand von mindestens einem der folgenden Aspekte umfasst:
- Transferrate oder Übertragungsgeschwindigkeit des Tokens (TK1, TK2) an besagtes Kommunikationsendgerät,
- Sicherheit einer Verbindung zu besagtem Kommunikationsendgerät,
- technische Leistungsfähigkeit besagten Kommunikationsendgeräts.

16. Weiterleitungsmodul für eine Weiterleitungsvorrichtung (FWS) eines Telekommunikationsnetzwerks (TN) für die Authentifizierung eines Benutzers (U1, U2) einer Geschäftsanwendung (BA) im Internet (INT), wobei ein Token (TK1, TK2) von besagter Geschäftsanwendung (BA) an ein Kommunikationsendgerät besagten Benutzers (U1, U2) übermittelt wird, wobei besagtes Kommunikationsendgerät mit einem Telekommunikationsnetzwerk (TN) verbunden ist, und wobei besagter Benutzer (U1, U2) besagtes Token (TK1, TK2) oder eine aus besagtem Token (TK1, TK2) abgeleitete Token-Information zur Authentifizierung in besagter Geschäftsanwendung (BA) an besagte Geschäftsanwendung (BA) sendet,
- wobei besagtes Weiterleitungsmodul (FWM) eine Empfangsfunktion (F1) für den Empfang besagten Tokens (TK1, TK2) in Verbindung mit einer Benutzerkennung (UI1, UI2) von besagter Geschäftsanwendung (BA) umfasst, wobei besagte Benutzerkennung (UI1, UI2) besagten Benutzer (U1, U2) identifiziert,
- wobei besagtes Weiterleitungsmodul (FWM) eine Bestimmungsfunktion für die Bestimmung einer Kommunikationsadresse (CA1, CA2) besagten Kommunikationsendgeräts mittels besagter Benutzerkennung (UI1, UI2) umfasst,
- wobei besagtes Weiterleitungsmodul (FWM) ein Weiterleitungsfunktion für die Weiterleitung besagten Tokens (TK1, TK2) an besagtes Kommunikationsendgerät mittels besagter Kommunikationsadresse (CA1, CA2) umfasst und
- wobei besagtes Weiterleitungsmodul (FWM) eine Geräteauswahlfunktion (F3) für die Identifizierung besagten Kommunikationsendgeräts unter einer Vielzahl von Endgeräten besagten Benutzers anhand von mindestens einem der folgenden Aspekte umfasst:
- Transferrate oder Übertragungsgeschwindigkeit des Tokens (TK1, TK2) an besagtes Kommunikationsendgerät,
- Sicherheit einer Verbindung zu besagtem Kommunikationsendgerät,
- technische Leistungsfähigkeit besagten Kommunikationsendgeräts und
- wobei besagtes Weiterleitungsmodul (FWM) einen Programmcode enthält, der von einem Prozessor (PR) besagter Weiterleitungsvorrichtung (FWM) ausgeführt werden kann und dafür ausgelegt ist, besagte Empfangsfunktion (F1), besagte Bestimmungsfunktion, besagte Weiterleitungsfunktion und die Geräteauswahlfunktion (F3) auszuführen.

## Revendications

1. Procédé d'authentification d'un utilisateur (U1, U2) dans une application commerciale (BA) sur Internet (INT)
- dans lequel un jeton (TK1, TK2) est transmis depuis ladite application commerciale (BA) vers un terminal de communication dudit utilisateur (U1, U2), ledit terminal de communication étant connecté à un réseau de télécommunication (TN),
- dans lequel ledit utilisateur (U1, U2) envoie ledit jeton (TK1, TK2) ou les informations d'un jeton (TK1, TK2) déduites dudit jeton (TK1, TK2) à ladite application commerciale (BA) pour être authentifié dans ladite application commerciale (BA),
- dans lequel ladite application commerciale (BA) envoie ledit jeton (TK1, TK2) en relation avec un identifiant d'utilisateur (UI1, UI2) identifiant ledit utilisateur (U1, U2) à un dispositif de transfert (FWS) dudit réseau de télécommunication (TN),
- dans lequel ledit dispositif de transfert (FWS) détermine une adresse de communication (CA1, CA2) dudit terminal de communication au moyen dudit identifiant d'utilisateur (UI1, UI2) et
- dans lequel ledit dispositif de transfert (FWS) transfère ledit jeton (TK1, TK2) vers ledit terminal de communication au moyen de ladite adresse de communication (CA1, CA2), **caractérisé en ce que**
- ledit dispositif de transfert (FWS) ou un dispositif d'identification dudit réseau de télécommunication (TN) identifie ledit terminal de communication parmi une pluralité de terminaux dudit utilisateur conformément à au moins un des aspects suivants :
- le débit de transfert ou la vitesse de transmission du jeton (TK1, TK2) vers ledit terminal de communication,
- la sécurité d'une connexion audit terminal de communication,
- la capacité technique dudit terminal de communication.

2. Procédé selon la revendication 1, dans lequel ledit réseau de télécommunication (TN) est ou comprend un réseau mobile et ledit terminal de communication dudit utilisateur (U1, U2) est un terminal mobile.

3. Procédé selon la revendication 1, dans lequel ledit jeton (TK1, TK2) ou lesdites informations de jeton déduites dudit jeton (TK1, TK2) sont entré(es) dans une interface WEB de ladite application commerciale (BA).

4. Procédé selon la revendication 1, dans lequel ledit jeton (TK1, TK2) ou lesdites informations de jeton déduites dudit jeton (TK1, TK2) a/ont une durée de validité prédéterminée.

5. Procédé selon la revendication 1, dans lequel ledit dispositif de transfert (FWS) convertit ledit jeton (TK1, TK2) avant le transfert vers ledit terminal d'utilisateur, en particulier en paroles.

6. Procédé selon la revendication 1, dans lequel ladite adresse de communication (CA1, CA2) contient un numéro de téléphone et/ou un identifiant alphanumérique, en particulier un identifiant de ressource uniforme (URI).

7. Procédé selon la revendication 1, dans lequel ladite application commerciale (BA) est ou contient une application financière et/ou une application bancaire.

8. Procédé selon la revendication 1, dans lequel ladite application commerciale (BA) communique avec ledit dispositif de transfert (FWS) dudit réseau de télécommunication (TN) après une procédure d'authentification mutuelle.

9. Procédé selon la revendication 1, dans lequel ladite application commerciale (BA) et ledit dispositif de transfert (FWS) coopèrent dans un environnement interentreprises.

10. Procédé selon la revendication 1, dans lequel ledit dispositif de transfert (FWS) ou ledit dispositif d'identification détermine un groupe de terminaux (GT1, GT2) dudit utilisateur (U1, U2) connectés audit réseau de télécommunication (TN) et associés à ladite adresse de communication (CA1, CA2).

11. Procédé selon la revendication 10, dans lequel ledit dispositif de transfert (FWS) ou ledit dispositif d'identification identifie ledit terminal utilisateur parmi ledit groupe de terminaux (GT1, GT2) dudit utilisateur (U1, U2).

12. Procédé selon la revendication 1, dans lequel ledit dispositif de transfert (FWS) ou ledit dispositif d'identification identifie ledit terminal d'utilisateur conformément à l'aspect du profil d'utilisateur (P1, P2) ou des préférences d'utilisateur dudit utilisateur (U1, U2).

13. Procédé selon la revendication 1, dans lequel il fait partie d'une authentification multifacteur, en particulier une authentification à deux facteurs, dans lequel ledit terminal utilisateur ou l'adresse de communication (CA1, CA2) représente un facteur que ledit utilisateur (U1, U2) possède.

14. Procédé selon la revendication 1, dans lequel ladite authentification multifacteur contient au moins un deuxième facteur connu de l'utilisateur (U1, U2), en particulier un mot de passe et/ou un code PIN et/ou une quelconque identification biométrique dudit utilisateur (U1, U2).

15. Dispositif de transfert (FWS) d'un réseau de télécommunication (TN) pour l'authentification d'un utilisateur (U1, U2) dans une application commerciale (BA) sur Internet (INT), dans lequel un jeton (TK1, TK2) est transmis depuis ladite application commerciale (BA) vers un terminal de communication dudit utilisateur (U1, U2), ledit terminal de communication étant connecté audit réseau de télécommunication (TN), et dans lequel ledit utilisateur (U1, U2) envoie ledit jeton (TK1, TK2) ou les informations d'un jeton déduites dudit jeton (TK1, TK2) à ladite application commerciale (BA) pour être authentifié dans ladite application commerciale (BA),
- dans lequel ledit dispositif de transfert (FWS) comprend des moyens de réception pour recevoir ledit jeton (TK1, TK2) en relation avec un identifiant d'utilisateur (UI1, UI2) à partir de ladite application commerciale (BA), ledit identifiant d'utilisateur (U1, U2) identifiant ledit utilisateur (U1, U2),
- dans lequel ledit dispositif de transfert (FWS) comprend des moyens de détermination pour la détermination d'une adresse de communication (CA1, CA2) dudit terminal de communication au moyen dudit identifiant d'utilisateur (UI1, UI2),
- dans lequel ledit dispositif de transfert (FWS) comprend des moyens de transfert pour transférer ledit jeton (TK1, TK2) vers ledit terminal de communication au moyen de ladite adresse de communication (CA1, CA2), et
- **caractérisé en ce que**
ledit dispositif de transfert (FWS) comprend des moyens de sélection de dispositif pour identifier ledit terminal de communication parmi une pluralité de terminaux dudit utilisateur conformément à au moins un des aspects suivants :
- le débit de transfert ou la vitesse de transmission du jeton (TK1, TK2) vers ledit terminal de communication,
- la sécurité d'une connexion audit terminal de communication,
- la capacité technique dudit terminal de communication.

16. Module de transfert pour un dispositif de transfert (FWS) d'un réseau de télécommunication (TN) pour l'authentification d'un utilisateur (U1, U2) dans une application commerciale (BA) sur Internet (INT), dans lequel un jeton (TK1, TK2) est transmis depuis ladite application commerciale (BA) vers un terminal de communication dudit utilisateur (U1, U2), ledit terminal de communication étant connecté audit réseau de télécommunication (TN), et dans lequel ledit utilisateur (U1, U2) envoie ledit jeton (TK1, TK2) ou les informations d'un jeton déduites dudit jeton (TK1, TK2) à ladite application commerciale (BA) pour être authentifié dans ladite application commerciale (BA),
- dans lequel ledit module de transfert (FWM) comprend une fonction de réception (F1) pour recevoir ledit jeton (TK1, TK2) en relation avec un identifiant d'utilisateur (UI1, UI2) à partir de ladite application commerciale (BA), ledit identifiant d'utilisateur (U1, U2) identifiant ledit utilisateur (U1, U2),
- dans lequel ledit module de transfert (FWM) comprend une fonction de détermination pour la détermination d'une adresse de communication (CA1, CA2) dudit terminal de communication au moyen dudit identifiant d'utilisateur (UI1, UI2),
- dans lequel ledit module de transfert (FWM) comprend une fonction de transfert pour transférer ledit jeton (TK1, TK2) vers ledit terminal de communication au moyen de ladite adresse de communication (CA1, CA2), et
- dans lequel ledit module de transfert (FWM) comprend une fonction de sélection de dispositif (F3) pour identifier ledit terminal de communication parmi une pluralité de terminaux dudit utilisateur conformément à au moins un des aspects suivants :
- le débit de transfert ou la vitesse de transmission du jeton (TK1, TK2) vers ledit terminal de communication,
- la sécurité d'une connexion audit terminal de communication,
- la capacité technique dudit terminal de communication, et
- dans lequel ledit module de transfert (FWM) comprend un code de programme pouvant être exécuté par un processeur (PR) dudit dispositif de transfert (FWS) et étant adapté pour exécuter ladite fonction de réception (F1), ladite fonction de détermination, ladite fonction de transfert et la fonction de sélection de dispositif (F3).
